(19) **Europäisches Patentamt / European Patent Office / Office européen des brevets**

(11) **EP 4 092 928 B1**

(12) **FASCICULE DE BREVET EUROPEEN**

(45) Date de publication et mention de la délivrance du brevet:
**29.01.2025 Bulletin 2025/05**

(21) Numéro de dépôt: **22173442.9**

(22) Date de dépôt: **16.05.2022**

(51) Classification Internationale des Brevets (IPC):
**H04B 7/06** *(2006.01)*    **H04B 7/08** *(2006.01)*
*H01Q 9/00* *(2006.01)*    *H01Q 21/00* *(2006.01)*
*G01S 7/03* *(2006.01)*    *G01S 7/28* *(2006.01)*

(52) Classification Coopérative des Brevets (CPC):
**H04B 7/0891; H04B 7/0617;** G01S 7/03;
G01S 7/2813; G01S 7/36; G01S 2013/0245;
H01Q 9/00; H01Q 21/00; H04B 7/0874

(54) **ANTENNE RÉSEAU PLANAIRE**

PLANARE NETZANTENNE

PLANAR NETWORK ANTENNA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.05.2021 FR 2105238**

(43) Date de publication de la demande:
**23.11.2022 Bulletin 2022/47**

(73) Titulaire: **THALES**
**92190 Meudon (FR)**

(72) Inventeurs:
• MAZEAU, Thierry
  33700 MERIGNAC (FR)
• GARREC, Patrick
  33700 MERIGNAC (FR)
• VEYRAC, Yoan
  33700 MERIGNAC (FR)

(74) Mandataire: **Atout PI Laplace**
**Immeuble Up On**
**25 Boulevard Romain Rolland**
**CS 40072**
**75685 Paris Cedex 14 (FR)**

(56) Documents cités:
WO-A1-2014/077946    US-A- 5 675 343
US-A1- 2019 372 240

• MILNE K: "RADAR AND ANTENNAS: PART 2", ELECTRONICS AND COMMUNICATION ENGINEERING JOURNAL, INSTITUTION OF ELECTRICAL ENGINEERS, LONDON, GB, vol. 2, no. 1, 1 February 1990 (1990-02-01), pages 17 - 24, XP000099776, ISSN: 0954-0695

## Description

L'invention se situe dans le domaine des antennes planaires comprenant un réseau d'éléments rayonnants unitaires.

L'invention s'applique aux antennes radiofréquences, notamment, aux antennes hyperfréquences. De telles antennes peuvent être utilisées dans différentes applications telles que les applications radar dans l'avionique et l'aérospatiale, la communication haut-débit, les balises et les technologies spatiales.

Elle concerne notamment les radars à antennes actives aussi appelés AESA (acronyme de l'expression anglo-saxonne « Active Electronically Scanned Array ») et les antennes à entrées et sorties multiples aussi appelées MIMO en référence à l'expression anglo-saxonne « Multiple-Input Multiple-Output ».

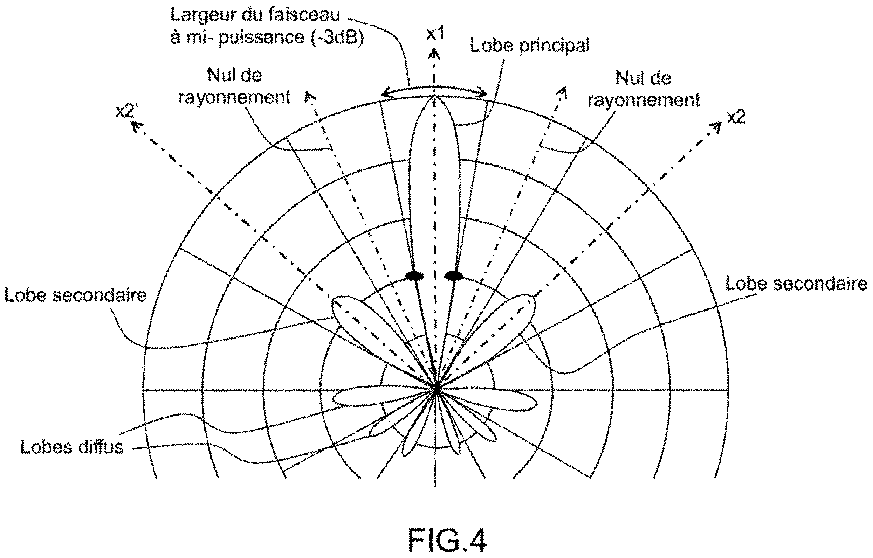

Lorsqu'une antenne planaire à réseau d'éléments rayonnants bidimensionnel émet un faisceau selon un axe principal x1, elle présente un diagramme de rayonnement en dB dans différentes directions formées autour du centre de l'antenne dans un plan perpendiculaire au plan de l'antenne. Un tel diagramme est représenté sur la figure 4 autour d'un point central dans un plan prédéterminé. Le diagramme de rayonnement comprend un lobe principal rayonné selon l'axe principal x1. L'axe x1 correspond à l'axe du maximum absolu du diagramme de rayonnement. Le diagramme de rayonnement comprend deux lobes secondaires de part et d'autre du lobe principal, rayonné selon des axes x2, x2' respectifs de lobes secondaires, correspondant aux axes de rayonnement des maximums locaux les plus élevés du diagramme de rayonnement après le maximum absolu. Le diagramme de rayonnement comprend également des diffus aussi appelés lobes diffus selon d'autres axes correspondant aux autres maximums locaux du diagramme de rayonnement. Les différents lobes sont séparés par des minimax du diagramme de rayonnement.

Il existe un besoin de réduire les lobes secondaires et les lobes diffus de l'antenne d'un radar. En effet, des r dans des directions autres que le lobe principal entraînent les inconvénients suivants : les éléments éclairés par les lobes secondaires sont vus comme des parasites et ajoutés, en réception, dans le lobe principal. Un écho mobile fort est alors amalgamé aux réceptions du lobe principal, générant une ambiguïté de détection et, par exemple, une fausse alarme dans le lobe principal. Ceci est fortement gênant en cas de fort dépointage du faisceau de l'antenne, les lobes secondaires et les lobes diffus remontant à des niveaux importants, en particulier lorsque l'antenne est embarquée à bord d'un aéronef à basse altitude et un lobe secondaire et des diffus sont dirigés vers le sol. Une telle remontée des niveaux des lobes secondaires et diffus empêche l'utilisation de l'antenne pour les radars de combat. Par ailleurs, une émission dans les lobes secondaires et les lobes diffus, limite la discrétion du radar lors de l'émission. Les émissions des lobes secondaires permettent aux brouilleurs de synchroniser une réplique pour générer de faux plots, qui apparaîtront dans le lobe principal de réception. Le radar est donc leurré de tels échos. C'est ce que l'on appel des brouilleurs angulaires.

Les lobes secondaires à la réception entraînent également des inconvénients. Les éléments éclairés par les lobes secondaires sont vus et ajoutés, en réception, dans le lobe principal. Une fois la réception globale effectuée, il n'est plus possible de séparer les réceptions dans l'axe du lobe principal de réception des réceptions dans les secondaires et les lobes diffus.

Par ailleurs, il existe une déformation des lobes secondaires en fonction de l'angle de pointage. Cette déformation entraîne une dissymétrie et un élargissement des lobes secondaires ainsi que des variations de gain des lobes (secondaires, diffus et principal) en fonction de l'ange de pointage.

Une solution connue pour limiter les lobes secondaires à l'émission est de choisir des coefficients de pointage de façon à optimiser le rapport entre le lobe principal sur lobes secondaires, par exemple de type fenêtre de Hann. Toutefois, ce type de correction entraîne un élargissement du lobe principal et donc une perte de puissance dans l'axe d'émission du lobe principal et une légère perte de précision. Par ailleurs, cette perte de puissance rayonnée entraîne une perte de puissance reçue qui doit être compensée par un besoin d'augmenter la puissance rayonnée ce qui se traduit par un échauffement du panneau antennaire, par l'atténuation du signal et par des problèmes de régimes thermique différents des amplificateurs et donc des corrections de phase à effectuer en fonction des directions de pointage et des pondérations.

Pour les radars à antenne active ou AESA, il est possible de générer des dissymétries du diagramme d'émission de pulse d'émission à pulse d'émission. Cela permet de modifier les niveaux des lobes secondaires droite et gauche et mais a pour inconvénient de moduler les niveaux rayonnés et les niveaux reçus.

Une autre solution utilisable aussi bien à l'émission qu'à la réception consiste à coupler l'antenne principale du radar à une antenne réseau auxiliaire, dite ancillaire. On détermine les déphasages et atténuations à appliquer aux différentes voies de l'antenne ancillaire de sorte que le radar présente des lobes secondaires et des lobes diffus de puissance plus faible que ceux de l'antenne principale sans modifier le lobe principal. Toutefois, cette solution nécessite des équipements supplémentaires dont l'antenne ancillaire qui présente un certain encombrement ayant pour effet, lorsqu'un encombrement prédéterminé est attribué au système, d'obliger à réduire la surface de l'antenne principale.

A la réception, on connaît des méthodes de lutte contre les brouillages involontaires telles que les méthodes d'Opposition des Lobes Secondaires ou OLS. Toutefois, ces méthodes nécessitent des antennes supplémentaires et des récepteurs supplémentaires. Cela nécessite aussi un traitement du signal conséquent qui estime les gains respectifs des deux antennes de réception (principale et auxiliaire pseudo omnidirectionnelle). Le principe, connu, est d'appairer des réceptions faites par l'antenne pseudo omnidirectionnelle (cardioïde) avec les caractéristiques des lobes secondaires de l'antenne principale, tant en amplitude qu'en phase. Cela a un coût (consommation, poids et puissance de calcul donc dissipation). La profondeur d'atténuation de ces méthodes est, par ailleurs, limitée. De plus, les antennes électroniques ayant des pointages dans des angles différents, avec des variations de gain des lobes secondaires (ainsi que du lobe principal), il n'est pas possible d'utiliser une antenne auxiliaire cardioïde fixe. La fluctuation des lobes secondaires et l'élargissement du lobe principal en fonction de l'angle de pointage nécessitent une calibration dynamique par direction de pointage et une correction inter-voies. Cette antenne auxiliaire doit suivre les pointages du faisceau principal. En cas de remontée de lobes secondaires, la solution usuelle et de resserrer la maille du réseau d'éléments rayonnant ce qui a un coût et provoque une densité qui est problématique au niveau de l'implantation (nombre de boitiers, routage des composants, refroidissement ...).

Un but de l'invention est de limiter au moins un des inconvénients précités.

A cet effet, l'invention a pour objet une antenne réseau comprenant un réseau d'éléments rayonnants composé de N éléments rayonnants, N étant un entier supérieur à 1, chaque élément rayonnant du réseau d'éléments rayonnants comprenant un port d'excitation principal, le réseau d'éléments rayonnants comprenant au moins un premier élément rayonnant comprenant uniquement le port d'excitation principal et un sous-réseau secondaire composé de N1 deuxièmes élément(s) rayonnant(s) pris parmi les N éléments rayonnants du réseau, tel que N1 est supérieur ou égal à 1 et inférieur à N, chaque élément rayonnant du sous-réseau secondaire comprenant un port d'excitation secondaire.

Avantageusement, l'antenne comprend un circuit de traitement configuré pour permettre de véhiculer des signaux depuis et/ou vers les ports d'excitation principaux dans un même mode principal pris parmi le mode commun et le mode différentiel et permettant de véhiculer des signaux vers et/ou depuis les ports d'excitation secondaires dans un même mode secondaire pris parmi le mode commun et le mode différentiel.

Avantageusement, l'antenne comprend un circuit de traitement comprenant :

- N circuits principaux d'émission aptes à régler de façon indépendante des phases et des amplitudes de signaux principaux d'excitation des ports d'excitation principaux respectifs de façon à générer un faisceau principal d'émission selon une direction principale d'émission prédéterminée réglable et/ou N circuits principaux de réception aptes à régler de façon indépendante des phases et amplitudes des signaux principaux de réception issus des ports d'excitation principaux respectifs de façon à générer un faisceau principal de réception selon une direction principale de réception prédéterminée réglable, et

- N1 circuits secondaires d'émission aptes à régler de façon indépendante des phases et amplitudes de signaux d'excitation des ports d'excitation secondaires respectifs de façon à générer un faisceau secondaire d'émission selon une direction secondaire d'émission prédéterminée réglable et/ou N circuits secondaires de réception aptes à régler de façon indépendante des phases secondaires et des amplitudes secondaires de signaux secondaires de réception issus des ports d'excitation secondaires respectifs de façon à générer un faisceau secondaire de réception selon une direction secondaire de réception prédéterminée réglable.

Avantageusement, l'antenne comprend plusieurs sous-réseaux secondaires, le réseau d'éléments rayonnants comprenant un sous-réseau unitaire composé d'au moins un premier élément rayonnant, le circuit de traitement permettant de générer simultanément des faisceaux secondaires d'émission à partir des sous-réseaux secondaires respectifs ou de générer simultanément des faisceaux secondaires de réception à partir des sous-réseaux secondaires respectifs.

Avantageusement, les éléments rayonnants du sous-réseau secondaire sont disposés autour du premier élément rayonnant ou des premiers éléments rayonnants.

L'invention se rapporte également à un procédé de génération de faisceaux par une antenne selon l'invention. Le procédé comprend les étapes suivantes :

- exciter les ports d'excitation principaux des N éléments rayonnants du réseau de façon à générer un faisceau principal d'émission selon une première direction d'émission prédéterminée,

- exciter les ports d'excitation secondaires du sous-réseau secondaire de façon à générer, simultanément au faisceau principal d'émission, un faisceau secondaire d'émission selon une deuxième direction d'émission prédéterminée, et/ou

- mettre en forme des signaux issus des ports d'excitation principaux et les sommer de façon à générer un faisceau principal en réception selon une première direction de réception prédéterminée,

- mettre en forme des signaux issus des ports d'excitation secondaires du sous-réseau secondaire et les sommer de façon à générer, simultanément au faisceau principal de réception, un faisceau secondaire en réception selon une deuxième direction de réception prédéterminée.

L'invention se rapporte également à un procédé de limitation d'un autre lobe autre qu'un lobe principal d'un faisceau principal d'émission par une antenne selon l'invention, le procédé comprenant les étapes suivantes :

- exciter les ports d'excitation principaux de façon à générer le faisceau principal d'émission selon la première direction d'émission prédéterminée,

- exciter les ports d'excitation secondaires du sous-réseau secondaire de façon à générer simultanément au faisceau principal, un faisceau secondaire d'émission présentant un lobe principal du faisceau secondaire en opposition de phase avec l'autre lobe du faisceau principal d'émission selon l'autre direction d'émission de l'autre lobe d'émission et présentant une amplitude inférieure ou égale à l'amplitude de l'autre lobe du faisceau principal.

D'autres caractéristiques, détails et avantages de l'invention ressortiront à la lecture de la description faite en référence aux dessins annexés donnés à titre d'exemple et qui représentent, respectivement :

- la figure 1 illustre de façon schématique une antenne selon l'invention,

- la figure 2 illustre schématiquement un exemple de circuit de traitement double couplé à un élément rayonnant du réseau secondaire,

- la figure 3 illustre un exemple d'un circuit de traitement simple couplé à un élément rayonnant comprenant uniquement le port d'excitation principal,

- la figure 4 déjà décrite illustre un diagramme de rayonnement classique d'une antenne planaire.

D'une figure à l'autre les mêmes éléments sont repérés par les mêmes références.

L'invention concerne les antennes réseau planaires plus connues sous le nom d'antennes patchs comprenant un réseau plan d'éléments rayonnants unitaires de type pastilles conductrices aussi appelés pavés microruban (aussi appelés patch microstrip).

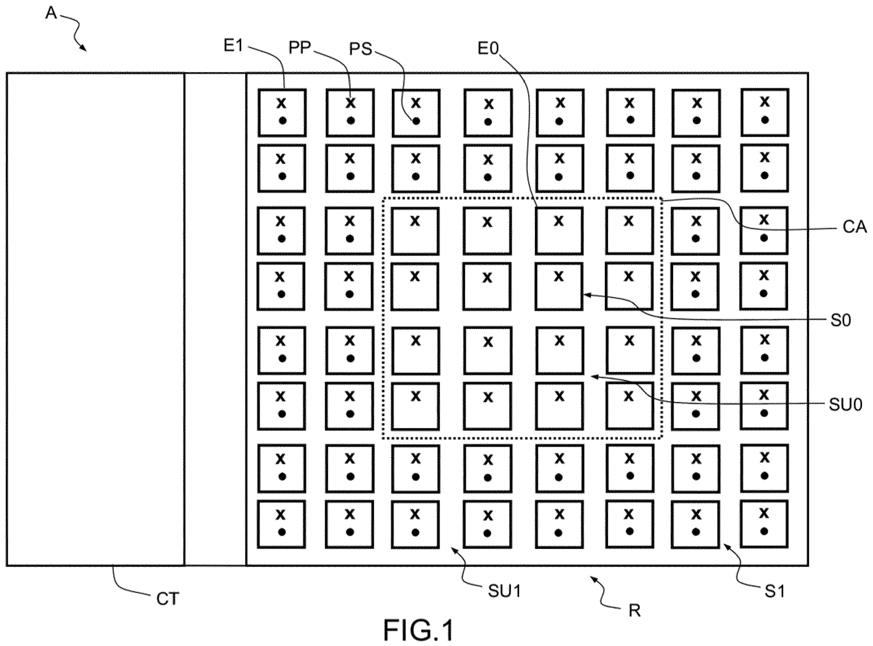

Comme visible sur la figure 1, l'antenne A comprend un réseau R d'éléments rayonnants composé d'un nombre N supérieur à 1 d'éléments rayonnants E0, E1 sensiblement plans, s'étendant sensiblement dans le plan de la figure 1. N est égal à 64 dans l'exemple non limitatif de la figure 1.

L'invention se rapporte notamment aux antennes actives ou AESA. L'invention concerne également les antennes à entrées multiples, sorties multiples communément appelées MIMO, acronyme de l'expression anglo-saxonne « Multiple-Input Multiple-Output ».

De préférence, chaque élément rayonnant E0, E1 est une pastille en matériau conducteur. En variante, au moins un élément rayonnant comporte plusieurs pastilles conductrices empilées. Dans l'exemple non limitatif de la figure 1, les éléments rayonnants E0, E1 présentent une forme carrée. En variante, les éléments rayonnants présentent une autre forme, par exemple une forme de disque ou une autre forme de parallélogramme comme par exemple un rectangle ou un losange.

Comme visible sur la figure 1, l'antenne A comprend un circuit de traitement CT couplé aux éléments rayonnants E0, E1 en des ports d'excitation PP, PS respectifs de façon à permettre l'excitation des éléments rayonnants E0, E1 au niveau des ports d'excitation E0, E1 respectifs à partir d'au moins un signal d'entrée et/ou de façon à permettre le traitement de signaux issus de l'excitation des ports d'excitation PP, PS respectifs de façon à générer un signal de réception.

Le circuit de traitement CT est apte à véhiculer des signaux vers ou depuis chaque port d'excitation PP, PS en mode commun, le port d'excitation PP, PS comprend alors un unique point d'excitation comme représenté en figure 1, ou en mode différentiel, le port d'excitation comprend alors deux points d'excitation.

Le couplage entre le circuit de traitement et les ports respectifs est réalisé de façon connue par l'homme du métier. Ce couplage est, par exemple, réalisé par couplage électromagnétique par fente. En variante, le couplage est réalisé en connectant électriquement l'extrémité d'une ligne de transmission à un point d'excitation. Le couplage peut en variante être effectué sur le plan même de l'élément rayonnant plan, ou « patch » en l'attaquant directement par une ligne imprimée microruban ou « microstrip », connectée au bord de l'élément rayonnant. L'excitation peut aussi être réalisée par couplage par proximité à une ligne « microstrip » imprimée à un niveau situé entre le « patch » et la couche formant le plan de masse.

Le couplage peut être réalisé de la même manière ou de manière différente pour les différents points d'excitation.

Comme visible sur la figure 1, chaque élément rayonnant E0, E1 comprend un port d'excitation PP dit, principal représenté par une croix.

Selon l'invention, parmi les N éléments rayonnants E0, E1 du réseau R, un nombre U supérieur ou égal à 1 d'éléments rayonnants E0 et inférieur à N, dits principaux, comprend un unique port d'excitation qui est le port d'excitation principal PP. Dans l'exemple non limitatif de la figure 1, U est égal à 16. Ces éléments E0 forment un sous-réseau dit simple S0.

Le réseau R d'éléments rayonnants E0, E1 comprend également au moins un sous-réseau secondaire Si d'éléments rayonnants pris parmi les éléments rayonnants du réseau R (avec i = 1 à S où S est le nombre de sous-réseau secondaire, égal à 1 dans l'exemple non limitatif de la figure 1). i est égal à 1 dans l'exemple non limitatif de la figure 1.

Le sous-réseau secondaire Si est composé de Ni éléments rayonnants Ei (Ei = E1 sur la figure 1), avec Ni supérieur ou égal à 1 et inférieur à N. Ni=N1 est égal à 48 dans l'exemple non limitatif de la figure 1 et Ni= N-U.

Chaque élément rayonnant E1 du sous-ensemble secondaire S1 comprend, outre le port d'excitation principal PP, un deuxième port d'excitation PS, dit port d'excitation secondaire PS, représenté par un point sur la figure 1.

Chacun des ports d'excitation PP, PS est couplé au circuit de traitement CT.

L'antenne A selon l'invention permet notamment, en prévoyant un circuit de traitement CT adéquat, de générer plusieurs faisceaux, dont un faisceau principal d'émission en excitant les ports d'excitation principaux PP et un faisceau secondaire d'émission en excitant les ports d'excitation secondaires PS. Il est également possible de générer un faisceau principal de réception à partir de signaux issus des ports d'excitation principaux PP et un faisceau secondaire de réception à partir de signaux issus des ports d'excitation secondaires.

Il est notamment possible de générer un faisceau principal en émission en excitant les ports d'excitation principaux PP de l'antenne A et de générer un faisceau secondaire en excitant les ports d'excitation secondaires PS.

Ces faisceaux présentent un lobe principal, des lobes secondaires et des diffus. La direction d'un faisceau est la direction du lobe principal de ce faisceau.

En réglant les phases des signaux d'excitation des ports principaux PP respectifs il est possible de régler la direction du faisceau principal. En réglant les phases et les amplitudes des signaux d'excitation des ports d'excitation secondaires, il est possible de régler la direction du faisceau secondaire et notamment de générer un faisceau secondaire selon la direction d'un des lobes secondaires du faisceau principal ; en opposition de phase avec ce dernier et dont l'amplitude est définie de façon à ajuster la puissance émise par l'antenne selon cette direction pour d'atténuer le lobe secondaire émis par l'antenne.

L'antenne A selon l'invention permet, par ailleurs, de bénéficier de toute la surface rayonnante de l'antenne, c'est-à-dire de la totalité des éléments rayonnants PP, PS du réseau d'éléments rayonnants R de l'antenne A pour générer le faisceau principal. Il n'y a donc pas de perte de puissance du faisceau principal. Cette solution est compacte car elle ne nécessite pas d'antenne supplémentaire pour générer les deux faisceaux.

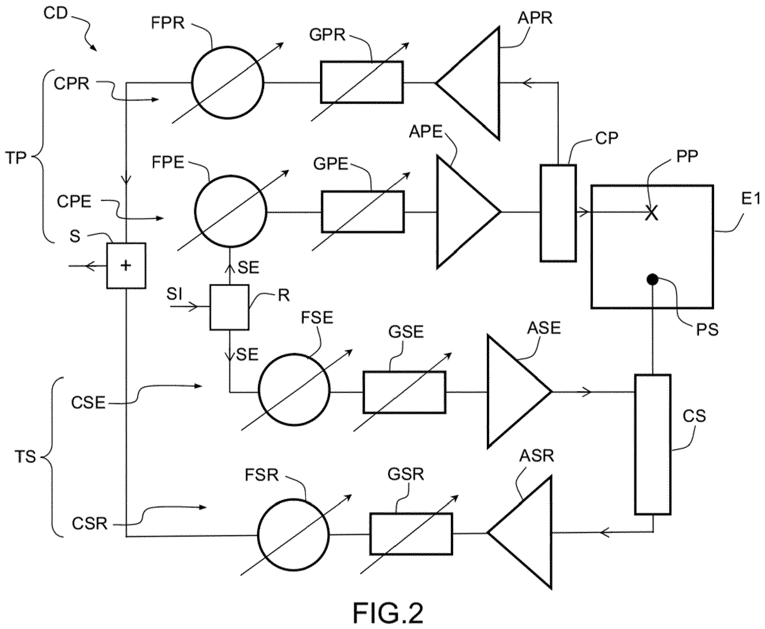

Le circuit de traitement CT comprend N circuits de traitement principaux TP, dont un est représenté sur la figure 2, couplés aux ports d'excitation principaux PP respectifs et N1 circuits de traitement secondaires TS, dont un est représenté sur la figure 2, couplés aux ports d'excitation secondaires respectifs PS.

Les dynamiques des signaux à traiter pour atténuer un lobe secondaire dans les circuits de traitement principaux TP et les circuits de traitement secondaires TS sont de plus de 20 dB, la puissance du lobe secondaire de l'ordre de 20 dB plus faible que celle du lobe principal. Le fait de générer le faisceau secondaire présentant un lobe principal d'amplitude plus faible que le lobe principal du faisceau principal au moyen de circuits de traitement différents permet de gérer plus facilement cette dynamique de façon peu coûteuse, il n'est notamment pas nécessaire de prévoir des atténuateurs susceptibles de supporter une grande dynamique.

Par ailleurs, cette solution permet, en utilisant moins d'éléments rayonnants pour atténuer les lobes secondaires et les lobes diffus aussi appelés diffus, de limiter encore les besoins en atténuateurs pour réaliser cette fonction. Les gains des chaînes des circuits de réception ou d'émission étant proportionnels au nombre d'éléments rayonnants secondaires, ce nombre peut être configuré pour que ces chaînes d'émission/réception travaillent dans la zone de gain utile. Cela permet de faire cet ajustement de gain sans utiliser des moyens électroniques (atténuateurs variables, amplificateurs à gain variables) agissant sur une grande dynamique de gain. Cela a pour effet, de limiter les intermodulations en limitant les variations de l'IP3 (Intermodulation du 3ème ordre) connues de l'homme du métier. Cela contribue aussi à limiter les variations des facteurs de bruit des chaînes d'émission/ réception.

De plus, le décalage en phase induit par les différentes valeurs d'atténuation des circuits de traitement principaux et secondaires est limité.

En outre, cette solution permet de sommer la puissance reçue par les ports d'un même élément rayonnant, dans l'élément rayonnant et dans l'air ce qui permet de limiter les problèmes d'intermodulation et d'augmenter la puissance rayonnée. Elle permet d'éviter la dissipation dans les circuits intégrés et / ou dans l'antenne. En outre, la sommation des puissances des voies principales et secondaires se faisant au niveau de l'élément rayonnant et non par l'intermédiaire d'un circuit électronique comprenant des limitations de puissance, de gain et de linéarité d'amplitude, cela permet de limiter les variations d'IP3 précitées et d'avoir à dissiper de la puissance inutilement dans les composants électroniques.

La solution proposée consomme une faible puissance de l'ordre de la puissance émise dans les lobes secondaires du faisceau principal, dans le cas d'une application de suppression des lobes secondaires.

La solution proposée permet en outre l'utilisation d'une maille plus grande que $\lambda/2$ où $\lambda$ est la longueur d'onde du faisceau ou une maille triangulaire puisqu'elle permet d'éliminer les lobes secondaires ou diffus gênants.

Le nombre N1 d'éléments rayonnants E1 du sous-réseau secondaire dépend de la dynamique nécessaire pour la suppression du lobe secondaire ou du diffus correspondant et de la précision d'élimination souhaitée.

Sur la figure 2, on a représenté un exemple de circuit de traitement dit double CD couplé aux ports d'excitation PP, PS, d'un des éléments rayonnants E1 comprenant deux ports d'excitation PP, PS.

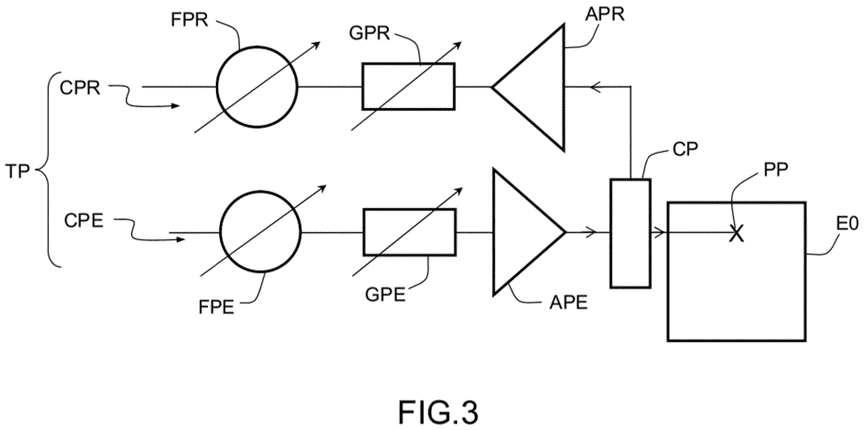

Le circuit de traitement double CD comprend un circuit de traitement principal TP couplé au port principal PP de l'élément rayonnant E1 et un circuit de traitement secondaire TS couplé au port d'excitation secondaire PS du même élément rayonnant E1. Le circuit de traitement simple représenté en figure 3, couplé à un des éléments rayonnants E0, comprenant uniquement le port d'excitation principal PP, comprend uniquement le circuit de traitement principal TP.

Avantageusement, les circuits de traitement principaux TP respectifs couplés aux ports d'excitation principaux PP respectifs sont identiques. Il en est avantageusement de même pour les circuits de traitement secondaires TS couplés aux ports secondaires PS respectifs du sous-réseau S1.

Avantageusement, les N circuits de traitement principaux TP comprennent N circuits principaux d'émission CPE aptes à régler de façon indépendante des phases et amplitudes de signaux d'excitation des ports d'excitation principaux PP respectifs de façon à permettre de générer un faisceau principal d'émission présentant un lobe principal d'amplitude prédéterminée réglable selon une direction principale d'émission prédéterminée réglable.

Le circuit principal d'émission CPE comprend, dans l'exemple non limitatif de la figure 2, un déphaseur commandable FPE apte à appliquer un déphasage réglable à un signal d'entrée SE. Le circuit principal d'émission CPE comprend un régleur d'amplitude GPE commandable permettant de régler l'amplitude du signal sortant du déphaseur commandable FPE. Le régleur d'amplitude est, par exemple, un atténuateur commandable ou un amplificateur à gain commandable. Le circuit principal d'émission CPE comprend en outre un amplificateur de sortie APE, par exemple, un amplificateur haute puissance amplifiant le signal sortant de l'amplificateur commandable.

Avantageusement, les N circuits de traitement principaux TP comprennent N circuits principaux de réception CPR aptes à régler de façon indépendante des phases et amplitudes des signaux de réception issus des ports d'excitation principaux PP respectifs de façon à permettre de générer un faisceau physique principal de réception présentant un lobe principal, d'amplitude prédéterminée réglable, selon une direction principale de réception prédéterminée réglable.

Le circuit principal de réception CPR comprend, dans l'exemple non limitatif de la figure 1, un amplificateur d'entrée recevant un signal généré sous l'effet de l'excitation du port d'excitation par une onde radioélectrique. Le circuit principal de réception CPR comprend un régleur d'amplitude commandable GPR, par exemple un atténuateur commandable ou un amplificateur à gain commandable, recevant le signal de sortie d'un amplificateur d'entrée EPR recevant un signal issu du port principal PP d'excitation. Le régleur d'amplitude commandable GPR agit sur l'amplitude du signal de sortie de l'amplificateur d'entrée APR de façon à délivrer un signal de sortie d'amplitude réglable. Le circuit principal de réception CPR comprend un déphaseur commandable FPR appliquant un déphasage réglable au signal de sortie du régleur d'amplitude CPR.

Avantageusement, les N1 circuits de traitement secondaires TS comprennent N1 circuits secondaires d'émission CSE respectifs aptes à régler de façon indépendante des phases et amplitudes de signaux d'excitation des ports d'excitation secondaires PS respectifs de façon à permettre de générer un faisceau secondaire d'émission dont le lobe principal présente une amplitude prédéterminée réglable selon une direction secondaire d'émission prédéterminée réglable et présentant un déphasage prédéterminé par rapport au faisceau principal d'émission.

Le circuit secondaire d'émission CSE comprend, dans l'exemple non limitatif de la figure 1, un déphaseur commandable FSE apte à appliquer un déphasage réglable à un signal d'entrée SE. Le circuit secondaire d'émission CSE comprend un régleur d'amplitude GSE, agissant sur l'amplitude du signal sortant du déphaseur commandable FSE de façon à générer un faisceau secondaire présentant un lobe principal d'amplitude prédéterminée réglable. Le régleur d'amplitude GSE est, par exemple, un amplificateur à gain réglable ou un atténuateur réglable. Le circuit secondaire d'émission CSE comprend en outre un amplificateur de sorti ASE, par exemple, un amplificateur haute puissance amplifiant le signal sortant de l'amplificateur commandable GSE.

Avantageusement, les N1 circuits de traitement secondaires TS comprennent N1 circuits secondaires de réception CSR aptes à régler de façon indépendante des phases et amplitudes des signaux de réception issus des ports d'excitation secondaires PS respectifs de façon à permettre de générer un faisceau secondaire de réception dont le lobe principal présente une amplitude prédéterminée réglable selon une direction secondaire de réception prédéterminée réglable et présentant un déphasage prédéterminé avec le faisceau principal de réception.

Le circuit secondaire de réception CSR comprend, dans l'exemple non limitatif de la figure 1, un amplificateur d'entrée ASR recevant un signal issu du port d'excitation secondaire PS. Le circuit secondaire de réception CSR comprend également un régleur d'amplitude GSR, par exemple un atténuateur commandable ou un amplificateur à gain commandable GSR, recevant le signal de sortie de l'amplificateur d'entrée ASR. Le régleur d'amplitude GSR agit sur l'amplitude du signal au signal de sortie de l'amplificateur d'entrée ASR pour délivrer un signal de sortie présentant une amplitude réglable. Le circuit secondaire de réception CSR comprend un déphaseur commandable FSR appliquant un déphasage réglable au signal de sortie du régleur d'amplitude GSR.

Chacun des circuits de traitement principal TP ou secondaire TS comprend un dispositif d'orientation du signal, CP et respectivement CS, par exemple un commutateur ou un circulateur, permettant de commuter entre un mode émission dans lequel le circuit d'émission CPE, respectivement CSE, est apte à exciter le port d'excitation associé PP, respectivement PE, et un mode de réception dans lequel le circuit de réception CPR, respectivement CSR, est apte à mettre en forme un signal issu du port d'excitation associé PP respectivement PS. Le dispositif d'orientation CP, respectivement CS, est apte alternativement dans un premier état dans lequel il oriente un signal provenant du port principal PP, respectivement secondaire PS, vers l'amplificateur d'entrée APE, respectivement ASE, et dans un deuxième état dans lequel il oriente un signal issu de l'amplificateur de sortie APR, respectivement ASR, vers le port principal PP, respectivement le port secondaire PS.

En variante, chaque circuit de traitement principal TP ou secondaire TS comprend un circuit d'émission ou un circuit de réception.

La solution proposée permet, en commandant de façon adéquate, les déphaseurs et les amplificateurs commandables associés aux différents éléments rayonnants et les dispositifs d'orientation, de générer simultanément deux faisceaux d'émission selon des axes d'émission respectifs réglables avec des amplitudes et phases relatives réglables et deux faisceaux de réception selon des axes de réception respectifs réglables avec des amplitudes et phases relatives entre un lobe secondaire ou diffus du faisceau principal et le lobe principal du faisceau secondaire réglables.

L'invention se rapporte à un procédé de génération simultanée de faisceaux physiques d'émission utilisant une antenne selon l'invention.

Le procédé comprend les étapes suivantes :

- exciter les N ports d'excitation principaux PP des N éléments rayonnants du réseau R de façon à générer un faisceau principal d'émission selon une première direction d'émission prédéterminée,

- exciter les N1 ports d'excitation secondaires PS du sous-réseau secondaire S1 de façon à générer, simultanément au faisceau principal d'émission, un faisceau secondaire en émission selon une deuxième direction d'émission prédéterminée.

A cet effet le procédé comprend :

- régler des phases et amplitudes des signaux d'excitation des N ports d'excitation principaux PP respectifs de façon à générer le faisceau principal d'émission selon la première direction d'émission prédéterminée,

- régler des phases et amplitudes des signaux d'excitation des N1 ports d'excitation secondaires N1 respectifs du sous-réseau secondaire S1 de façon à générer, simultanément au faisceau principal d'émission, le faisceau secondaire d'émission selon la deuxième direction d'émission éventuellement avec un déphasage prédéterminé par rapport au faisceau principal, et éventuellement de sorte que le rapport entre l'amplitude du lobe principal du faisceau principal et l'amplitude du lobe principal du faisceau secondaire soit prédéterminée.

Le réglage des phases et amplitudes des signaux d'excitation des ports d'excitation principaux respectifs de façon à générer le faisceau principal d'émission est réalisé par les circuits principaux circuits d'émission CPE des circuits principaux TP respectifs.

Le réglage des phases et amplitudes des signaux d'excitation des ports d'excitation secondaires respectifs de façon à générer le faisceau secondaire est réalisé par les circuits d'émission CSE des circuits secondaires TP respectifs.

Les circuits de traitement appliquent, par exemple, des déphasages réglables et/ou des atténuations ou amplifications réglables à un même signal d'entrée SE issu d'un répartiteur R répartissant un signal initial SI issu d'une source ou à des signaux d'entrées différents synchronisés et présentant une même fréquence.

Dans ce cas, le faisceau principal d'émission est généré en excitant les N ports d'excitation principaux PP d'ordre i avec i = 1 à N par les signaux d'excitation dits principaux respectifs suivants Vpi(t):

$$\mathrm{Vpi(t)} = e^{i\omega t} * A_i * e^{i\varphi_i}$$

Où $\omega$ est la pulsation du signal d'excitation, $A_i$ est l'amplitude du signal d'excitation du port d'excitation PP d'ordre i et $\varphi_i$ est la phase du signal d'excitation du port d'excitation PP d'ordre i. Ce signal Vpi(t) est une des N composantes destinée à former le faisceau principal selon la première direction d'émission.

Le faisceau secondaire est généré en excitant les N1 ports d'excitation principaux PS d'ordre j par les signaux d'excitation suivants :

$$\mathrm{VSj(t)} = e^{i\omega t} * A_j * e^{i\varphi_j}$$

Où $\omega$ est la pulsation du signal d'excitation, $A_j$ est l'amplitude du signal d'excitation du port d'excitation PS d'ordre j et $\varphi_j$ est la phase du signal d'excitation du port d'excitation PS d'ordre j. Ce signal VSj(t) est une des Si composantes destinée à former le faisceau secondaire selon la deuxième direction d'émission.

En variante, le faisceau secondaire est émis à une fréquence différente du faisceau principal. A cet effet, les circuits d'émission secondaires sont, par exemple reliés à une source secondaire générant un signal d'entrée secondaire et les circuits d'émission principaux sont reliés à une source principale générant un signal d'entrée principal de fréquence distincte de celle du signal d'entrée secondaire à une fréquence distincte de la fréquence du signal d'entrée secondaire. Le signal d'entrée principal passe ensuite à travers un répartiteur principal du circuit de traitement divisant le signal secondaire d'entrée en des signaux d'excitation respectivement injectés en entrée des circuits principaux d'émission respectifs.

Dans ce dernier cas, les signaux générés par les sources principale et secondaire doivent être cohérents en phase.

Le dispositif comprend avantageusement une horloge configurée pour synchroniser les signaux délivrés par les deux sources.

L'invention porte également sur un procédé d'atténuation de la puissance rayonnée par l'antenne dans la direction selon laquelle est rayonné un autre lobe qui est un lobe du faisceau principal d'émission autre que le lobe principal émis par l'antenne et qui est émis selon une autre direction d'émission (dépendante de la direction du lobe principal, par exemple, un lobe dirigé vers une direction formant un angle de 30° par rapport à la direction selon laquelle est dirigé le lobe principal. Dans ce cas, le faisceau principal et le faisceau secondaires sont générés à une même fréquence.

Le procédé d'atténuation comprend les étapes suivantes :

- exciter les N ports d'excitation principaux PP de façon à générer le faisceau principal d'émission selon la première direction d'émission prédéterminée,

- exciter les N1 ports d'excitation secondaires PS du sous-réseau secondaire S1 de façon à générer simultanément au faisceau principal, un faisceau secondaire d'émission dans la même direction que l'autre lobe, et présentant un lobe principal présentant une amplitude inférieure ou égale à l'amplitude de l'autre lobe à atténuer et en opposition de phase avec le lobe principal du faisceau principal.

Avantageusement, l'amplitude du lobe principal du faisceau secondaire est sensiblement égale à l'amplitude de l'autre lobe du faisceau principal à atténuer. Cela permet d'annuler sensiblement la puissance rayonnée par l'antenne selon la direction de l'autre lobe.

A cet effet le procédé comprend :

- régler des phases et des amplitudes des signaux d'excitation des N ports d'excitation principaux PP respectifs de façon à générer le faisceau principal d'émission selon la première direction d'émission à une fréquence prédéterminée,

- régler des phases et des amplitudes des signaux d'excitation des ports d'excitation secondaires respectifs du sous-réseau secondaire de façon à générer le faisceau secondaire d'émission selon l'autre direction d'émission, présentant un lobe principal en opposition de phase avec l'autre lobe du faisceau principal d'émission et présentant un lobe principal d'amplitude inférieure ou égale à l'amplitude de l'autre lobe du faisceau principal, de façon à atténuer ou à annuler sensiblement la puissance rayonnée par l'antenne selon l'autre direction d'émission.

A cet effet, on fait, par exemple d'abord varier simultanément de la même façon, c'est-à-dire de la même valeur, les phases des signaux d'excitation des ports d'excitation secondaires, pour des phases et amplitudes fixes des signaux d'excitation des ports d'excitation principaux et des amplitudes fixes des signaux d'excitation des ports d'excitation secondaires, jusqu'à à obtenir la puissance rayonnée la plus faible possible selon la direction de l'autre lobe du faisceau principal. Le lobe secondaire du faisceau principal et le lobe principal du faisceau secondaire sont alors en opposition de phase.

On fait ensuite varier simultanément de la même façon, c'est-à-dire de la même valeur, les amplitudes des signaux d'excitation des ports d'excitation secondaires, pour des phases et amplitudes fixes des signaux d'excitation des ports d'excitation principaux et des phases fixes des signaux d'excitation des ports d'excitation secondaires, jusqu'à obtenir, selon la direction de l'autre lobe du faisceau principal, une puissance rayonnée plus faible que la puissance rayonnée par le lobe principal, voire sensiblement nulle.

Les ondes rayonnées par l'antenne selon l'autre direction sont destructives et le faisceau secondaire atténue ou annule la puissance émise par l'antenne selon l'autre direction.

Dans l'exemple non limitatif de la figure 2, les déphaseurs commandables et amplificateurs commandables des voies d'émission des différents circuits de traitement sont commandés de façon à appliquer les déphasages et amplifications souhaitées pour générer le faisceau principal d'émission souhaité et pour générer simultanément le faisceau secondaire d'émission selon l'autre direction d'émission de façon à atténuer l'autre lobe.

L'antenne selon l'invention peut en outre être utilisée pour générer simultanément des faisceaux d'émission selon des directions différentes dans un autre but, par exemple afin de leurrer un autre radar, ou par exemple, d'utiliser le faisceau principal pour les applications Air-Air et simultanément le faisceau secondaire pour les applications Air-sol qui nécessitent moins d'énergie.

Le même procédé de génération de faisceaux peut être mise en oeuvre à la réception. Le procédé comprend alors les étapes suivantes :

- mettre en forme des signaux issus des ports d'excitation principaux PP et les sommer de façon à générer un faisceau principal en réception selon une première direction de réception prédéterminée,

- mettre en forme des signaux issus des ports d'excitation secondaires PS du sous-réseau secondaire et les sommer de façon à générer, simultanément au faisceau principal de réception, un faisceau secondaire en réception selon une deuxième direction de réception prédéterminée.

A cet effet le procédé comprend les étapes suivantes :

- régler des phases et amplitudes des signaux issus des ports d'excitation principaux PP respectifs et les sommer de façon à générer le faisceau principal de réception selon la première direction de réception prédéterminée,

- régler des phases et amplitudes des signaux issus des ports d'excitation secondaires PS respectifs du sous-réseau secondaire et les sommer de façon à générer le faisceau secondaire de réception selon la deuxième direction de réception.

Le réglage des phases et amplitudes des signaux issus des ports d'excitation principaux PP respectifs de façon à générer le faisceau principal de réception selon la première direction de réception prédéterminée est réalisé par les circuits de réception CPR de circuits principaux TP respectifs.

Le réglage des phases et amplitudes des signaux d'excitation des ports d'excitation secondaires PS respectifs de façon à générer le faisceau secondaire d'émission selon la deuxième direction prédéterminée est réalisé par les circuits de réception CSR de circuits secondaires TS respectifs.

Cela permet de générer des faisceaux de réception selon différentes directions et donc de recevoir simultanément selon différentes directions, bien qu'avec des gains plus faibles que celui du faisceau principal du fait que le faisceau secondaire est généré par un nombre d'éléments rayonnants plus faible que le faisceau principal.

Il peut, par exemple être intéressant d'utiliser le faisceau principal de réception pour les applications Air-Air et le faisceau secondaire de réception pour les applications Air-sol qui nécessitent moins d'énergie.

Les circuits de traitement appliquent, par exemple, des déphasages réglages et amplifications réglables à un même signal d'entrée ou à des signaux d'entrées différents synchronisés et présentant une même fréquence.

En variante, les signaux d'entrée peuvent présenter des fréquences distinctes de façon que le faisceau principal et le faisceau secondaire présentent des fréquences distinctes.

L'invention porte, par exemple, sur un procédé d'atténuation d'un autre lobe, par exemple un lobe secondaire, qui est un lobe du faisceau principal autre que le lobe principal émis par l'antenne. Le procédé d'atténuation d'un lobe autre que le lobe principal à la réception comprend :

- mettre en forme des signaux issus des N ports d'excitation principaux PP de façon à générer un faisceau principal de réception selon une première direction de réception prédéterminée,

- mettre en forme des signaux issus des ports d'excitation secondaires PS du sous- réseau secondaire de façon à générer, simultanément au faisceau principal de réception, un faisceau secondaire de réception selon l'autre direction de réception de l'autre lobe, dont le lobe principal est en opposition de phase avec le lobe secondaire du faisceau principal et de sorte que le lobe principal du faisceau secondaire présente une amplitude inférieure ou égale à l'amplitude de l'autre lobe du faisceau principal de réception. De cette façon, l'amplitude des signaux reçus par l'antenne dans l'autre direction est inférieure ou égale à l'amplitude de l'autre lobe du faisceau principal de réception et, de préférence, sensiblement nulle. Ces étapes sont réalisées par les circuits de réception des circuits de traitement principaux et secondaires.

Les circuits de traitement appliquent, par exemple, des déphasages réglages et des amplifications ou atténuations réglables aux signaux issus des différents ports d'excitation PP, PS des différents éléments rayonnants avant de sommer ces signaux par un sommateur S.

Dans l'exemple non limitatif de la figure 2, les déphaseurs commandables et régleurs d'amplitude commandables des voies de réception des différents traitements sont commandés de façon à appliquer les déphasages et amplifications/ atténuations souhaités pour générer le faisceau principal de réception souhaité et pour générer simultanément le faisceau secondaire de réception selon l'autre direction de façon à atténuer l'autre lobe.

Dans la réalisation non limitative des figures 2 et 3, les circuits de traitement comprennent des circuits d'émission et de réception comprenant chacun un déphaseur commandable et un atténuateur commandable ou un amplificateur de gain commandable. Les déphaseurs et amplificateurs sont commandés par un calculateur commun appelé pointeur. Ces voies permettent de générer des faisceaux physiques d'émission et de réception.

Le traitement des signaux émis et reçus par des circuits d'émission et de réception à déphaseurs et régleurs d'amplitude commandables, c'est-à-dire de façon hardware, permet d'éviter la rétrodiffusion d'énergie vers le récepteur et donc les méfaits liés aux émissions parasites au niveau du récepteur.

Lorsque l'atténuation d'un lobe secondaire est effectuée à l'émission et à la réception le reliquat de signaux parasites est lié à la résolution des circuits d'émission et de réception est lié à la résolution en amplitude et en phase de ces circuits.

L'antenne comprend avantageusement un calculateur permettant de traiter numériquement les signaux en sortie des circuits de réception et, plus précisément, d'appliquer des déphasages réglables et des amplifications réglables à ces signaux de façon à former le faisceau principal de réception et le faisceau secondaire de réception par le calcul, par les techniques connues de l'homme du métier. Cela permet de limiter ou de supprimer le reliquat de signaux parasites.

Ce type de circuits de traitement n'est pas limitatif.

On peut, par exemple envisager, des circuits d'émission comprenant chacun générateur de forme d'onde réalisé par synthèse numérique directe (SND) permettent de générer des signaux de même fréquence et de phases et d'amplitudes ajustables sans recourir à l'usage d'atténuateurs commandables ni de déphaseurs commandables.

Les coefficients (amplification/ atténuation et déphasages) à appliquer aux signaux d'entrée pour générer les signaux d'excitation des ports d'excitation principaux respectifs pour générer un faisceau principal (en émission ou en réception) dans une direction donnée et à une fréquence donnée sont alors, par exemple, déterminés en relevant le diagramme (d'émission ou respectivement de réception) du faisceau principal selon les différentes directions de pointage, et éventuellement à différentes fréquences, en phase et en amplitude et en modifiant les coefficients de façon itérative jusqu'à l'obtention diagramme principal souhaité pour une direction donnée et une fréquence donnée.

Les différents coefficients (amplification/atténuation et déphasages) à appliquer aux signaux d'excitation des ports d'excitation secondaires respectifs pour générer un faisceau secondaire (en émission ou en réception) atténuant un lobe prédéterminé d'un faisceau principal généré (en émission ou respectivement à la réception) selon une direction donnée et à une fréquence donnée peuvent être déterminés en relevant le diagramme (d'émission ou respectivement de réception) du faisceau principal selon la direction de pointage à la fréquence déterminée, en phase et en amplitude, de relever les diagrammes de rayonnement (d'émission ou respectivement de réception) de l'antenne générant le faisceau principal et le faisceau secondaire (d'émission ou respectivement de réception) à la fréquence donnée en appliquant des coefficients prédéterminés aux ports d'excitation secondaires et en les modifiant jusqu'à obtenir un diagramme de rayonnement de l'antenne souhaité dans lequel les amplitudes des signaux rayonnés ou respectivement reçus dans la direction du lobe considéré soient inférieures ou égales à celles du lobe secondaire du faisceau principal d'émission et respectivement de réception et de préférence sensiblement nulles.

En variante, les différents coefficients sont déterminés de façon analytique à partir d'un modèle de l'antenne.

En variante, des coefficients sont déterminés de façon analytique puis sont affinés de façon itérative par mesure des diagrammes de rayonnement.

Dans la réalisation des figures, l'antenne comprend un sous-réseau d"éléments rayonnants secondaires mais peut en variante présenter plusieurs sous-réseaux d'éléments rayonnants secondaires de façon à permettre générer plusieurs faisceaux secondaires simultanément. Le réseau d'éléments rayonnants comprend toujours des éléments rayonnants principaux E0 comprenant un seul port d'excitation qui est le port d'excitation principal. Certains éléments rayonnants peuvent présenter plusieurs ports d'excitation secondaires.

Dans la réalisation des figures, les circuits de traitement sont configurés pour permettre d'exciter les ports d'excitation ou de traiter les signaux issus des ports d'excitation en mode commun. En variante, les circuits de traitement couplés aux ports d'excitation principaux et/ou ceux couplés aux ports d'excitation secondaires d'au moins un des sous-réseaux secondaires sont configurés pour permettre d'exciter les ports d'excitation considérés ou de traiter les signaux issus des ports d'excitation considérés en mode différentiel.

Dans la réalisation de la figure 1, les éléments rayonnants E1 du sous-réseau secondaire S1 et les éléments E0 du sous-réseau simple S0 sont répartis sur des surfaces SU1 et respectivement SU0 coplanaires séparées par une ligne fermée CA représentée en traits pointillés sur la figure 1. La première surface SU1 entoure complètement la surface centrale SU0. Autrement dit, la surface SU1 est une couronne ou un cadre.

Les surface SU1 et SU0 sont, avantageusement, mais non nécessairement, concentriques.

Si la couronne d'éléments rayonnants E0, E1 qui constitue l'antenne ancillaire, c'est-à-dire qui génère le faisceau secondaire, présente le même périmètre que le réseau d'éléments rayonnants E1 qui génère le faisceau principal, le faisceau secondaire présente la même ouverture angulaire que le faisceau principal, c'est-à-dire l'ouverture la plus petite réalisable avec la géométrie de l'antenne disponible. Cela permet d'annuler les lobes dans la zone angulaire la plus petite (réalisable avec la géométrie de l'antenne disponible).

En variante, l'antenne comprend plusieurs réseaux secondaires. Les éléments rayonnants des différents réseaux secondaires sont répartis sur des surfaces respectives coplanaires disjointes séparées deux à deux par des lignes fermées de façon à permettre de former des faisceaux rayonnants présentant des ouvertures angulaires différentes. Ceci permet de s'affranchir, par exemple, de l'élimination des lobes pointant vers le ciel et de ne traiter que les lobes pointant sur le sol ou en latéral.

Des surfaces respectives sur lesquelles sont répartis des éléments rayonnants de réseaux secondaires respectifs présentent, par exemple, des formes de couronne. Elles sont avantageusement concentriques mais pas nécessairement. Elles peuvent présenter des épaisseurs (distance entre un diamètre interne tourné vers une zone centrale entourée des couronnes et un diamètre externe, tournée vers l'extérieur de l'antenne) différentes.

**Revendications**

1. Antenne réseau (A) comprenant un réseau (R) d'éléments rayonnants (E0, E1) composé de N éléments rayonnants unitaires, N étant un entier supérieur à 1, **caractérisé en ce que** chaque élément rayonnant (E0, E1) du réseau (R) d'éléments rayonnants (E0, E1) comprenant un port d'excitation principal (PP), le réseau (R) d'éléments rayonnants (E0, E1) comprenant au moins un premier élément rayonnant (E0) comprenant uniquement le port d'excitation principal (PP) et un sous-réseau secondaire (S1) composé de N1 deuxièmes élément(s) rayonnant(s) (E1) pris parmi les N éléments rayonnants du réseau, tel que N1 est supérieur ou égal à 1 et inférieur à N, chaque élément rayonnant (E1) du sous-réseau secondaire (S1) comprenant un port d'excitation secondaire (PS),

l'antenne réseau étant adaptée pour générer un faisceau principal selon une première direction prédéterminée en utilisant lesdits ports d'excitation principaux (PP) et pour générer, simultanément au faisceau principal, un faisceau secondaire selon une deuxième direction prédéterminée en utilisant lesdits ports d'excitation secondaires.

2. Antenne réseau selon la revendication précédente, comprenant un circuit de traitement (CT) configuré pour permettre de véhiculer des signaux depuis et/ou vers les ports d'excitation principaux dans un même mode principal pris parmi le mode commun et le mode différentiel et permettant de véhiculer des signaux vers et/ou depuis les ports d'excitation secondaires dans un même mode secondaire pris parmi le mode commun et le mode différentiel.

3. Antenne réseau selon l'une quelconque des revendications précédentes, comprenant un circuit de traitement comprenant :

    - N circuits principaux d'émission aptes à régler de façon indépendante des phases et des amplitudes de signaux principaux d'excitation des ports d'excitation principaux (PP) respectifs de façon à générer un faisceau principal d'émission selon une direction principale d'émission prédéterminée réglable et/ou N circuits principaux de réception aptes à régler de façon indépendante des phases et amplitudes des signaux principaux de réception issus des ports d'excitation principaux (PP) respectifs de façon à générer un faisceau principal de réception selon une direction principale de réception prédéterminée réglable, et

    - N1 circuits secondaires d'émission aptes à régler de façon indépendante des phases et amplitudes de signaux d'excitation des ports d'excitation secondaires (PS) respectifs de façon à générer un faisceau secondaire d'émission selon une direction secondaire d'émission prédéterminée réglable et/ou N circuits secondaires de réception aptes à régler de façon indépendante des phases secondaires et des amplitudes secondaires de signaux secondaires de réception issus des ports d'excitation secondaires (PS) respectifs de façon à générer un faisceau secondaire de réception selon une direction secondaire de réception prédéterminée réglable.

4. Antenne réseau selon l'une quelconque des revendications précédentes, comprenant plusieurs sous-réseaux secondaires Si, le réseau d'éléments rayonnants comprenant un sous-réseau unitaire composé de U premier(s) élément(s) rayonnant(s), U étant un entier supérieur ou égal à 1, le circuit de traitement permettant de générer simultanément des faisceaux secondaires d'émission à partir des sous-réseaux secondaires respectifs ou de générer simultanément des faisceaux secondaires de réception à partir des sous-réseaux secondaires respectifs.

5. Antenne réseau selon la revendication précédente, dans lequel les éléments rayonnants du sous-réseau secondaire sont disposés autour du premier élément rayonnant ou des premiers éléments rayonnants.

6. Procédé de génération de faisceaux par une antenne réseau selon l'une quelconque

    des revendications précédentes comprenant les étapes suivantes :

        - exciter les ports d'excitation principaux (PP) des N éléments rayonnants du réseau (R) de façon à générer un faisceau principal d'émission selon une première direction d'émission prédéterminée,

        - exciter les ports d'excitation secondaires (PS) du sous-réseau secondaire (S1) de façon à générer, simultanément au faisceau principal d'émission, un faisceau secondaire d'émission selon une deuxième direction d'émission prédéterminée,

et/ou comprenant les étapes suivantes :

- mettre en forme des signaux issus des ports d'excitation principaux (PP) et les sommer de façon à générer un faisceau principal en réception selon une première direction de réception prédéterminée,
- mettre en forme des signaux issus des ports d'excitation secondaires (PS) du sous-réseau secondaire et les sommer de façon à générer, simultanément au faisceau principal de réception, un faisceau secondaire en réception selon une deuxième direction de réception prédéterminée.

7. Procédé de limitation d'un autre lobe autre qu'un lobe principal d'un faisceau principal d'émission par une antenne réseau selon l'une quelconque des revendications 1
à 5, le procédé de limitation comprenant :

- exciter les ports d'excitation principaux (PP) de façon à générer le faisceau principal d'émission selon la première direction d'émission prédéterminée,
- exciter les ports d'excitation secondaires (PS) du sous-réseau secondaire de façon à générer simultanément au faisceau principal, un faisceau secondaire d'émission présentant un lobe principal du faisceau secondaire en opposition de phase avec l'autre lobe du faisceau principal d'émission selon l'autre direction d'émission de l'autre lobe d'émission et présentant une amplitude inférieure ou égale à l'amplitude de l'autre lobe du faisceau principal.

**Patentansprüche**

1. Netzantenne (A), umfassend ein Netz (R) von strahlenden Elementen (E0, E1), das aus N einheitlichen strahlenden Elementen besteht, wobei N eine ganze Zahl ist, die größer als 1 ist, **dadurch gekennzeichnet, dass** jedes strahlende Element (E0, E1) des Netzes (R) von strahlenden Elementen (E0, E1) einen Haupterregungsanschluss (PP) umfasst, wobei das Netz (R) von strahlenden Elementen (E0, E1) mindestens ein erstes strahlendes Element (E0) umfasst, das nur den Haupterregungsanschluss (PP) umfasst, und ein sekundäres Teilnetz (S1), das aus N1 zweiten strahlenden Elementen (E1), die von den N strahlenden Elementen des Netzes genommen werden, besteht, sodass N1 größer als oder gleich 1 und kleiner als N ist, wobei jedes strahlende Element (E1) des sekundären Teilnetzes (S1) einen sekundären Erregungsanschluss (PS) umfasst, wobei die Netzantenne dazu geeignet ist, einen Hauptstrahl in einer ersten vorbestimmten Richtung unter Verwendung der Haupterregungsanschlüsse (PP) zu erzeugen und gleichzeitig mit dem Hauptstrahl einen sekundären Strahl in einer zweiten vorbestimmten Richtung unter Verwendung der sekundären Erregungsanschlüsse zu erzeugen.

2. Netzantenne nach dem vorhergehenden Anspruch, umfassend eine Verarbeitungsschaltung (CT), die dafür konfiguriert ist, das Übertragen von Signalen von und/oder zu den Haupterregungsanschlüssen in einem gleichen Hauptmodus, der von dem Gleichtaktmodus und dem Gegentaktmodus genommen wird, zu ermöglichen, und die ermöglicht, Signale zu oder von den sekundären Erregungsanschlüssen in einem gleichen sekundären Modus, der von dem Gleichtaktmodus und dem Gegentaktmodus genommen wird, zu übertragen.

3. Netzantenne nach einem der vorhergehenden Ansprüche, umfassend eine Verarbeitungsschaltung, Folgendes umfassend:

- N Hauptemissionsschaltungen, die in der Lage sind, unabhängig Phasen und Amplituden von Haupterregungssignalen der jeweiligen Haupterregungsanschlüsse (PP) derart zu regeln, dass ein Hauptemissionsstrahl in einer regelbaren vorbestimmten Hauptemissionsrichtung erzeugt wird, und/oder N Hauptempfangsschaltungen, die in der Lage sind, unabhängig Phasen und Amplituden der Hauptempfangssignale, die aus den jeweiligen Haupterregungsanschlüssen (PP) stammen, derart zu regeln, dass ein Hauptempfangsstrahl in einer regelbaren vorbestimmten Hauptempfangsrichtung erzeugt wird, und
- N1 sekundäre Emissionsschaltungen, die in der Lage sind, unabhängig Phasen und Amplituden von Erregungssignalen der jeweiligen sekundären Erregungsanschlüsse (PS) derart zu regeln, dass ein sekundärer Emissionsstrahl in einer regelbaren vorbestimmten sekundären Emissionsrichtung erzeugt wird, und/oder N sekundäre Empfangsschaltungen, die in der Lage sind, unabhängig sekundäre Phasen und sekundäre Amplituden von sekundären Empfangssignalen, die aus den jeweiligen sekundären Erregungsanschlüssen (PS) stammen, derart zu regeln, dass ein sekundärer Empfangsstrahl in einer regelbaren vorbestimmten sekundären Empfangsrichtung erzeugt wird.

4. Netzantenne nach einem der vorhergehenden Ansprüche, umfassend mehrere sekundäre Teilnetze Si, wobei das Netz von strahlenden Elementen ein einheitliches Teilnetz umfasst, das aus U ersten strahlenden Elementen besteht, wobei U eine ganze Zahl ist, die größer als oder gleich 1 ist, wobei die Verarbeitungsschaltung ermöglicht, gleichzeitig sekundäre Emissionsstrahlen aus den jeweiligen sekundären Teilnetzen zu erzeugen oder gleichzeitig sekundäre Empfangsstrahlen aus den jeweiligen sekundären Teilnetzen zu erzeugen.

5. Netzantenne nach dem vorhergehenden Anspruch, wobei die strahlenden Elemente des sekundären Teilnetzes um das erste strahlende Element oder die ersten strahlenden Elemente angeordnet sind.

6. Verfahren zum Erzeugen von Strahlen durch eine Netzantenne nach einem der vorhergehenden Ansprüche, umfassend die folgenden Schritte:

   - Erregen der Haupterregungsanschlüsse (PP) der N strahlenden Elemente des Netzes (R) derart, dass ein Hauptemissionsstrahl in einer ersten vorbestimmten Emissionsrichtung erzeugt wird,
   - Erregen der sekundären Erregungsanschlüsse (PS) des sekundären Teilnetzes (S1) derart, dass gleichzeitig mit dem Hauptemissionsstrahl ein sekundärer Emissionsstrahl in einer zweiten vorbestimmten Emissionsrichtung erzeugt wird,

   und/oder umfassend die folgenden Schritte:

   - Formen von aus den Haupterregungsanschlüssen (PP) stammenden Signalen und Summieren von ihnen derart, dass ein Hauptstrahl bei einem Empfang in einer ersten vorbestimmten Empfangsrichtung erzeugt wird,
   - Formen von aus den sekundären Erregungsanschlüssen (PS) des sekundären Teilnetzes stammenden Signalen und Summieren von ihnen derart, dass gleichzeitig mit dem Hauptempfangsstrahl ein sekundärer Strahl bei einem Empfang in einer zweiten vorbestimmten Empfangsrichtung erzeugt wird.

7. Verfahren zum Begrenzen einer anderen Strahlungskeule, die eine andere ist als eine Hauptstrahlungskeule eines Hauptemissionsstrahls durch eine Netzantenne nach einem der Ansprüche 1 bis 5, wobei das Verfahren zum Begrenzen Folgendes umfasst:

   - Erregen der Haupterregungsanschlüsse (PP) derart, dass der Hauptemissionsstrahl in der ersten vorbestimmten Emissionsrichtung erzeugt wird,
   - Erregen der sekundären Erregungsanschlüsse (PS) des sekundären Teilnetzes derart, dass gleichzeitig mit dem Hauptstrahl ein sekundärer Emissionsstrahl erzeugt wird, der eine Hauptstrahlungskeule des sekundären Strahls in Gegenphase zu der anderen Strahlungskeule des Hauptemissionsstrahls in der anderen Emissionsrichtung der anderen Emissionsstrahlungskeule aufweist und eine Amplitude aufweist, die kleiner als oder gleich der Amplitude der anderen Strahlungskeule des Hauptstrahls ist.

**Claims**

1. An array antenna (A) comprising an array (R) of radiating elements (E0, E1) consisting of N unitary radiating elements, with N being an integer greater than 1, **characterised in that** each radiating element (E0, E1) of the array (R) of radiating elements (E0, E1) comprises a main excitation port (PP), the array (R) of radiating elements (E0, E1) comprising at least one first radiating element (E0) comprising only the main excitation port (PP) and a secondary sub-array (S1) consisting of N1 second radiating elements (E1) taken from among the N radiating elements of the array, such that N1 is greater than or equal to 1 and is less than N, each radiating element (E1) of the secondary sub-array (S1) comprising a secondary excitation port (PS), the array antenna being adapted to generate a main beam in a first predetermined direction using said main excitation ports (PP) and to generate, simultaneously with the main beam, a secondary beam in a second predetermined direction using said secondary excitation ports.

2. The array antenna according to the preceding claim, comprising a processing circuit (CT) configured to allow signals to be conveyed from and/or to the main excitation ports in a same main mode taken from among the common mode and the differential mode and allowing signals to be conveyed to and/or from the secondary excitation ports in a same secondary mode taken from among the common mode and the differential mode.

3. The array antenna according to any one of the preceding claims, comprising a processing circuit comprising:

   - N main emission circuits capable of independently adjusting phases and amplitudes of main excitation signals of the respective main excitation ports (PP) so as to generate a main emission beam in a main predetermined adjustable emission direction and/or N main reception circuits capable of independently adjusting phases and amplitudes of the main reception signals originating from the respective main excitation ports (PP) so as to generate a main reception beam in a main predetermined adjustable reception direction, and

- N1 secondary emission circuits capable of independently adjusting phases and amplitudes of excitation signals of the respective secondary excitation ports (PS) so as to generate a secondary emission beam in a secondary predetermined adjustable emission direction and/or N secondary reception circuits capable of independently adjusting secondary phases and secondary amplitudes of secondary reception signals originating from the respective secondary excitation ports (PS) so as to generate a secondary reception beam in a secondary predetermined adjustable reception direction.

4. The array antenna according to any one of the preceding claims, comprising several secondary sub-arrays Si, the array of radiating elements comprising a unitary sub-array consisting of U first radiating elements, with U being an integer greater than or equal to 1, the processing circuit allowing secondary emission beams to be simultaneously generated from the respective secondary sub-arrays or allowing secondary reception beams to be simultaneously generated from the respective secondary sub-arrays.

5. The array antenna according to the preceding claim, wherein the radiating elements of the secondary sub-array are disposed around the first radiating element or the first radiating elements.

6. A method for generating beams by an array antenna according to any one of the preceding claims, comprising the following steps of:

- exciting the main excitation ports (PP) of the N radiating elements of the array (R) so as to generate a main emission beam in a first predetermined emission direction,
- exciting the secondary excitation ports (PS) of the secondary sub-array (S1) so as to generate, simultaneously with the main emission beam, a secondary emission beam in a second predetermined emission direction,

and/or comprising the following steps of:

- shaping signals originating from the main excitation ports (PP) and adding them so as to generate a main beam at reception in a first predetermined reception direction,
- shaping signals originating from the secondary excitation ports (PS) of the secondary sub-array and adding them so as to generate, simultaneously with the main reception beam, a secondary beam at reception in a second predetermined reception direction.

7. A method for limiting another lobe other than a main lobe of a main emission beam by an array antenna according to any one of claims 1 to 5, the method for limiting comprising:

- exciting the main excitation ports (PP) so as to generate the main emission beam in the first predetermined emission direction,
- exciting the secondary excitation ports (PS) of the secondary sub-array so as to generate, simultaneously with the main beam, a secondary emission beam having a main lobe of the secondary beam in phase opposition with the other lobe of the main emission beam in the other emission direction of the other emission lobe and having an amplitude that is less than or equal to the amplitude of the other lobe of the main beam.

CA S0 SU0

S1

R

SU1

E0

PS

PP

E1

A CT

FIG.1

FIG.2

FIG.3

EP 4 092 928 B1

Largeur du faisceau
à mi- puissance (-3dB)

x1

Lobe principal

Nul de
rayonnement

Nul de
rayonnement

x2'

x2

Lobe secondaire

Lobe secondaire

Lobes diffus

FIG.4